Europäisches Patentamt

European Patent Office

Office européen des brevets

(19)

(11) Veröffentlichungsnummer: **0 199 828**
A2

(12) # EUROPÄISCHE PATENTANMELDUNG

(21) Anmeldenummer: 85103869.5

(22) Anmeldetag: 30.03.85

(51) Int. Cl.⁴: **B 01 D 53/34**

(30) Priorität: 06.03.85 CH 1008/85

(43) Veröffentlichungstag der Anmeldung:
05.11.86 Patentblatt 86/45

(84) Benannte Vertragsstaaten:
AT BE DE FR GB NL SE

(71) Anmelder: GEBRÜDER SULZER AKTIENGESELLSCHAFT
Zürcherstrasse 9
CH-8401 Winterthur(CH)

(72) Erfinder: Stuecheli, Alexander, Dr.
Juchstrasse 10
CH-8400 Winterthur(CH)

(74) Vertreter: Dipl.-Ing. H. Marsch Dipl.-Ing. K. Sparing
Dipl.-Phys.Dr. W.H. Röhl Patentanwälte
Rethelstrasse 123
D-4000 Düsseldorf(DE)

(54) **Verfahren und Vorrichtung zum Reinigen von Gasen.**

(57) Beim Verfahren zum Reinigen von Gasen von Schadstoffen und Einbinden dieser in feste, deponiefähige Rückstände wird das Gas zunächst in einem Trockenreinigungsverfahren teilweise und anschliessend in einem Nassreinigungsverfahren weiter gereinigt.

EP 0 199 828 A2

KSR/Pat/P.5938/Bk/td

Gebrüder Sulzer Aktiengesellschaft, Winterthur / Schweiz

Verfahren und Vorrichtung zum Reinigen von Gasen

Die Erfindung betrifft ein Verfahren zum Reinigen von Gasen, insbesondere Rauchgas aus Feuerungs- und Verbrennungsanlagen, von Schadstoffen und Einbinden dieser in feste, deponiefähige Rückstände.

Die Erfindung betrifft weiterhin eine Anlage zum Durchführen des Verfahrens.

Das Rauchgas eines Kohlekraftwerkes enthält neben Kohlendioxyd, Wasser, Sauerstoff und Stickstoff noch in grösseren Mengen u.a. die Schadstoffe, Schwefeldioxyde, Stickoxyde, Kohlenwasserstoffe, Schwermetalldämpfe und grosse Mengen Flugaschestaub. Das Rauchgas einer Kehrrichtverbrennungsanlage enthält zusätzlich zu den in einem Kohlekraftwerk auftretenden Schadstoffen auch Salzsäure und Fluorwasserstoff. Hinter Sondermüllverbrennungsöfen für chemische Rückstände und Lösungsmittel enthält das Rauchgas verschiedene halogenierte saure Schadgase. Das Rauchgas fällt in grossen Mengen von einigen tausend bis hunderttausend Normkubikmeter an, meistens mit geringer Konzentration der Schadstoffe. Sie müssen heutzutage zunehmend gründlicher und mit Abscheidegraden der Schadstoffe von zum Teil über 90 % gereinigt werden. Die Endprodukte der Rauchgasreinigung müssen entweder in wieder brauchbarer oder dann deponiefähiger Form anfallen. Ferner sollen nur wenig Zusatzchemikalien für die Reinigung benötigt werden und es soll nur wenig oder kein Abwasser anfallen. Die Verbrennung der Brennstoffe im Dampfkessel soll bei alledem mit möglichst geringen zusätzlichen Verlusten ablaufen.

Es sind heute drei Verfahren zum Reinigen von Rauchgas bekannt, das Trockenverfahren, das Nassverfahren und das Halbtrockenverfahren, das hier aber keine Rolle spielt.

Beim Trockenverfahren wird das saure Rauchgas mit trockenen Reagenzien, eventuell Katalysatoren und Sorbenzien, in Kontakt gebracht. Nach erfolgter Reaktion werden die Endprodukte der Reinigung auch wieder trocken ausgetragen. Beispielsweise wird eine Trockenreinigung wie folgt realisiert: bei einem kohlebefeuerten Dampfkessel folgt dem Kessel ein Mischreaktor, der vom Rauchgas durchströmt wird und in die die Reagenzien eingetragen und fein im Rauchgas verteilt werden. Die gebildeten Endprodukte, d.h. die festen Reaktionsprodukte so wie auch die nicht umgesetzten Zusatzstoffe werden abgeschieden, z.B. in einem Elektrofilter. Der Nachteil des Trockenverfahrens liegt darin, dass der Aufwand an Chemikalien sehr hoch ist. Mehr als die Hälft kann unreagiert mit den Schadstoffen ausgetragen werden. Diese Rückstände sind noch aktiv und ihre Ablagerung in einer Deponie ist deshalb nicht immer zulässig.

Beim Nassverfahren wird zum Reinigen des Rauchgases dem Dampfkessel ein Waschturm nachgeschaltet. Hier strömen die beladenen Abgase von unten nach oben im Gegenstrom zu einer Waschflüssigkeit, meistens Wasser mit Kalziumhydroxyd. Das

- 3 -

Kalziumhydroxyd reagiert mit dem Schwefeldioxyd und andern sauren Komponenten des Rauchgases und der Schadstoff kann so in der flüssigen Phase abgezogen werden. Das gebildete Kalziumsulfit resp. Kalziumreaktionsprodukt wird dann abfiltriert und das Wasser wird mit frischem Kalziumhydroxyd wieder in den Waschturm zurückgeführt. Die Rückstände befinden sich im Abwasser. Die Schwermetalle lassen sich nach einer nasschemischen Behandlung als wasserlöslicher Schlamm abfiltrieren. Wird Kalziumsulfit oxydiert, entsteht Kalziumsulfat und aus diesem bildet sich Gips, das ebenfalls abgetrennt werden kann. Es verbleibt dennoch, je nach Zusammensetzung des Rauchgases ein noch saures chlorid- und/oder sulfithaltiges Abwasser. Das Abwasser kann a) unbehandelt abgelassen, b) in einem separaten Verdampfer eingedampft oder c) ins zu reinigende Rauchgas eingesprüht werden um das Chlorid und/oder Sulfit als Staub zusammen mit dem Flugstaub abscheiden zu können. Die beiden ersten Vorgehensweisen lösen zwar das Abwasserproblem, sie sind aber sehr energieintensiv, da die Verdampfungswärme des Abwassers nicht mehr genutzt werden kann, was ein erheblicher Nachteil ist.

Die beiden beschriebenen Grundverfahren der Rauchgasreinigung wurden bereits für verschiedene Einzelanwendungen spezifisch angepasst. Das erfindungsgemässe Verfahren ist ebenfalls eine Anpassung für eine spezifische Anwendung.

Der Erfindung liegt die Aufgabe zugrunde ein Verfahren der eingangs definierten Art zu schaffen, dass die aufgezeigten Nachteile beider bekannten Verfahren nicht aufweist. Diese Aufgabe wird gemäss der Erfindung durch die im Kennzeichen des Anspruchs 1 angegebenen Verfahrensschritte gelöst. Die Unteransprüche betreffen vorteilhafte Weiterbil-

- 4 -

dungen.

Gemäss der Erfindung werden ein Trockenverfahren und ein Nassverfahren zu einem Verfahren kombiniert, derart, dass die im Trockenverfahren anfallenden Reaktionsprodukte und die im Nassverfahren anfallende Waschwassermenge sehr gering sind und der Flugasche und/oder der Schlacke zugeführt und darin eingebunden werden, so dass sie deponiefähig sind. Das Verfahren ist deshalb abwasserfrei. Es wird kein Abwasser, sei es direkt oder indirekt verdampft, so dass auch kein Energieverlust entsteht. Die Flugasche ist genauso wie beim Nassverfahren deponiefähig. Der Chemikalienverbrauch ist gleich oder geringer als wie beim Nassverfahren allein, da die Alkalinität der Flugasche zur Neutralisation herangezogen werden kann.

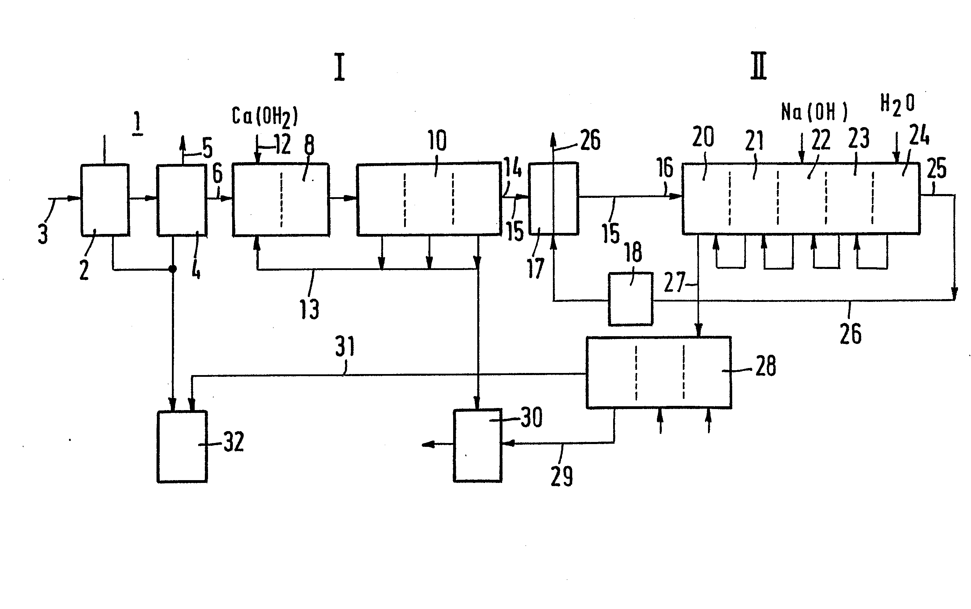

Ein Ausführungsbeispiel des Erfindungsgegenstandes ist nachfolgend anhand der Zeichnung, die eine Kehrrichtverbrennungsanlage, in der das erfindungsgemässe Verfahren durchgeführt wird, als Blockschema darstellt.

Eine Kehrrichtverbrennungsanlage 1 besteht aus einem Ofen 2, dem der Müll über einen Weg 3 zugeführt wird, und einem Dampfkessel 4. Der erzeugte Dampf verlässt den Kessel 4 über einen Weg 5. Das Rauchgas des Ofens 2, das den Dampfkessel 4 durchströmt, erreicht über einen Weg 6 eine Trockenreinigungsanlage I, die aus einem Mischreaktor 8 und einer Filteranlage 10 besteht. In den Mischreaktor 8 wird über einen oder mehrere Wege 12 eine Suspension oder ein Feststoffpulver, beide auf Kalk-, Natrium- oder Magnesiumbasis, z.B. gelöschter Kalk, $Ca(OH_2)$, eingedüst. Für die selektive Absorption von speziellen Schadstoffen werden geeignete Absorbenzien beigemischt. Die Reagenzienmenge wird nahstöchiometrisch zudosiert zwecks Abscheidung von 50 % bis 90 % der sauren Rauchgasanteile. Die vollständige Reaktion im Feststoffpulver läuft zunehmend langsamer ab und für eine möglichst vollständige chemische Umsetzung ist eine hohe, 5÷ 50-fache, Rezirkulationsrate über eine Zwischenabscheidung notwendig. Es ist wichtig, dass der Abscheidegrad der Säureanteile in dieser Trockenstufe I nicht zu hoch ist, denn in der folgenden Nassreinigungsanlage wird noch eine gewisse Säurekonzentration benötigt. Es ist deshalb kein wesentlicher Ueberschuss an Chemikalien in der Trockenstufe I notwendig. In der Filtervorrichtung 10 werden die Reaktionsprodukte, nicht verbrauchte Reagenzien und Flugasche vom Rauchgas abgetrennt. Die in der Filtervorrichtung 10 abgetrennte Stoffe werden über einen Weg 13 zum Mischreaktor 8 zurückgeführt, zwecks Verminderung des gesamten Verbrauchs an Reagenzien und der zur deponierenden Menge Rückstände. Das in der Trockenreinigungsanlage teils gereinigte Rauchgas tritt an einem Ausgang 14 aus und durchströmt anschliessend auf einem Weg 15 nach einem Eingang 16 einer Nassreinigungsanlage II einen Wärmeaustauscher 17.

Die Nassreinigungsanlage II kann mehrstufig sein, bestehend aus einer Quenchstufe 20, einer Schwermetallabsorptionsstufe 21, einer Säurestufe 22, einer Aerosolstufe 23 und einer Waschstufe 24. Das teils gereinigte Rauchgas wird in der Quenchstufe 20 zunächst gekühlt und dann mit saurem Wasser gesättigt. Anschliessend folgt die Schwermetallabsorption in Stufe 21, die stark sauer, im Bereich pH 0,5, betrieben wird. Die Säurestufe 22 wird leicht basisch, bei pH 7,5, betrieben und absorbiert die Säuren, die Salzsäure (HCl), Schwefeldioxyd ($SO_2$) und wenig Kohlendioxyd ($CO_2$). Dann kann noch eine Reinigung des Rauchgases von Aerosolen in Stufe 23 und schliesslich das Rauchgas noch in der Waschstufe 24 mit reinem Wasser gewaschen werden. Zusätzlich oder auch anstelle der Wasser-Waschstufe 24 kann eine Denox-Stufe konzipiert sein, die z.B. mittels Ammoniak die Stickstoffverbindungen NO und $NO_2$ im Rauchgas chemisch umwandelt. Das gereinigte Rauchgas verlässt die Anlage an einem Ausgang 25 über einen Weg 26, einen Saugzugventilator 18 und den Wärmeaustauscher 17. In dem Wärmeaustauscher 17 wird das Rauchgas aus der Trockenreinigungsanlage I vor Eintritt in die Nassreinigungsanlage II gekühlt. Die in der Nassreinigungsanlage II anfallende Abwassermenge ist infolge der Chloridvorabscheidung in der Trockenreinigungsanlage I nur gering. Das Waschwasser der Nassreinigungsanlage II wird über einen Weg 27 einer Wasserbehandlungsanlage 28 zugeführt. Ein Teil des aufbereiteten Abwassers wird über einen Weg 29 einer Zwischenlagerung 30 für Flugasche zur Benetzung der Flugasche zugeführt. Der restliche Teil des Abwassers wird als Löschwasser über einen Weg 31 einer Zwischenlagerung 32 für Schlacke des Verbrennungsofens 2 zugeführt.

Obschon das Verfahren hier für die Reinigung von Rauchgas aus Kehrrichtverbrennungsanlagen beschrieben ist, ist das Verfahren auch zum Reinigen von Rauchgasen aus Verbrennungsanlagen für fossile Brennstoffe, wo in erster Linie $SO_2$ und $NO_x$ als Schadgase entstehen, von Rauchgasen aus Sondermüll- oder Chemierückstandsverbrennungsanlagen, von sauren Prozessgasen wie Schwefelwasserstoff und sauren Gaskomponenten in Abluftströmen geeignet.

Patentansprüche
_____

1. Verfahren zum Reinigen von Gasen, insbesondere Rauchgas aus Feuerungs- und Verbrennungsanlagen, von Schadstoffen, und Einbinden dieser in feste deponiefähige Rückstände, dadurch g e k e n n z e i c h n e t , dass das Gas zunächst in einem Trockenreinigungsverfahren teilweise gereinigt und anschliessend in einem Nassreinigungsverfahren weiter gereinigt wird.

2. Verfahren nach Anspruch 1, dadurch gekennzeichnet, dass das Trockenreinigungsverfahren in einem Mischreaktor mit anschliessendem Filter stattfindet.

3. Verfahren nach Anspruch 2 oder 3, für saure Anteile enthaltende Gase, dadurch gekennzeichnet, dass im Trockenreinigungsverfahren die sauren Anteile des Gases nicht vollständig entfernt werden.

4. Verfahren nach Anspruch 3, dadurch gekennzeichnet, dass die sauren Anteile des Gases im Trockenreinigungsverfahren gerade soweit entfernt werden, dass das in der Nassreinigungsstufe anfallende Abwasser mengenmässig ausreicht, Schlacke und Flugasche der Feuerungs- und Verbrennungsanlage und trockene Reaktionsprodukte des Trockenverfahrens zu benetzen und für eine weitere Behandlung geeignet zu machen.

5. Verfahren nach Anspruch 4, dadurch gekennzeichnet, dass die Alkalinität der Flugasche aus der Filteranlage benutzt wird, um saure Abwasser aus der Nassreinigungsstufe zu neutralisieren.

6. Anlage zum Durchführen des Verfahrens nach Anspruch 1, gekennzeichnet durch eine Trockenreinigungsanlage (I), dessen Ausgang (14) für gereinigtes Gas mit dem Eingang (16) einer Nassreinigungsanlage (II) verbunden ist.

7. Anlage nach Anspruch 6, dadurch gekennzeichnet, dass die Trockenreinigungsanlage (I) aus einem Mischreaktor (8) mit nachfolgender Filtervorrichtung (10), und die Nassreinigungsanlage (II) aus einer Quenchstufe (20), einer Schwermetallabscheidungsstufe (21) und einer Säurestufe (22) besteht.

8. Anlage nach Anspruch 7, dadurch gekennzeichnet, dass die Abwasserableitung (27) aus der Quenchstufe (20) mit der Zwischenlagerung (30) der Flugasche verbunden ist.

9. Anlage nach Anspruch 8, dadurch gekennzeichnet, dass die Abwasserableitung (27) aus der Quenchstufe (20) über eine Waschwasserbehandlungsvorrichtung (28) mit der Zwischenlagerung (30) der Flugasche verbunden ist.

10. Anlage nach einem der Ansprüche 6 bis 9, dadurch gekennzeichnet, dass die Trockenreinigungsanlage (I) über die Primärseite eines Wärmeaustauscher (17) mit der Nassreinigungsanlage (II) verbunden ist, und dass der Ausgang (25) für gereinigtes Gas der Nassreinigungsanlage (II) mit einem Saugzugventilator (18) verbunden ist.